# EUROPEAN PATENT SPECIFICATION

(11) **EP 0 487 959 B1**
(45) Date of publication and mention of the grant of the patent: **18.01.1995**
(21) Application number: 91119081.7
(22) Date of filing: 08.11.1991
(51) Int. Cl.: F25B 43/02

(54) **Oil separator**
Ölabscheider
Séparateur d'huile

(30) Priority: 26.11.1990 US 617773
(43) Date of publication of application: 03.06.1992
(73) Proprietor: AC & R COMPONENTS, INC., Chatham, Illinois 62629 (US)
(72) Inventor: Westermeyer, Gary W., Bluffs, Illinois 62621 (US)
(74) Representative: Goddar, Heinz J., Dr.

(56) References cited:
- EP-A- 0 346 301
- DE-A- 3 705 850
- FR-A- 1 028 269
- US-A- 2 446 882
- US-A- 4 478 050

## Description

The present invention relates to oil separators and more particularly to an oil separator for use in a refrigeration system to separate oil from an oil/refrigerant gas mixture.

Refrigeration systems utilize a compressor to compress a refrigerant gas, a condenser to cool the compressed gas and to cause the gas to condense to a liquid and an evaporator for absorbing heat from the area to be refrigerated as the liquid refrigerant expands and evaporates. In many such systems, oil is used as a lubricant and to provide a more effective seal in the compressor and, by such use, is mixed with the refrigerant gas in the compressor and is carried along with the refrigerant. Oil, however, is not a refrigerant and therefore it reduces the efficiency of the system if the oil is permitted to remain mixed with the refrigerant gas as it moves to the condenser. Therefore, it is known to provide an oil separator in the line between the compressor and condenser to remove the oil from the refrigerant gas. Generally, refrigerant gas from the compressor contains oil in the form of a fog as it enters the oil separator inlet.

Various arrangements have been provided for separating the oil from the gas. For example, U.S. Patent No. 3,778,984 discloses an arrangement for introducing the oil and gas mixture tangentially to a separator so as to centrifuge the oil from the gas so that the oil will fall downwardly under the force of gravity into a collecting chamber in the bottom of the separator. U.S. Patent No. 4,478,050 discloses an oil separator in which fluid is introduced tangentially in a chamber bounded by a screen upon which the oil particles collect. The oil and refrigerant mixture is caused to flow in a vortex providing centrifugal separation of oil particles. Deflector tabs are provided to enhance or regenerate the vortex in the lower portion of the chamber above the oil outlet opening. U.S. Patent No. 4,263,029 discloses an oil separator in which fluid is introduced tangentially in a passageway formed by a spiral wall having a single revolution. The fluid then passes to a chamber bounded by an annular ring and then to a chamber bounded by a funnel shaped wall with a central opening for passage therethrough of collected oil and including vanes for guiding the oil to the opening. The "oil free" gas leaves the separator through a central, axial passage.

A device as defined in the preamble part of claim 1 is disclosed in DE-A 37 05 850. The known device has its baffle secured to the central cylindrical wall. The gas component should exit the separator through openings which are provided above said baffle. However, this arrangement bears the risk that rather concentrated oily components may also exit through these openings, since a complete separation thereof cannot be achieved.

The present invention as defined in claim 1 provides an improved oil separator which provides an enhanced oil separation capability without increasing the size of the oil separator. The oil/refrigerant mixture is caused to flow in a generally spiral flow path along the peripheral wall of the oil separator chamber so as to increase the effective path length of the oil/refrigerant mixture along the peripheral wall. A screen mesh is provided along the wall to enhance the separation of oil from the mixture and to provide a collection area for the separated oil.

The separated oil drips from the screen to an inverted funnel/baffle which has a plurality of drain holes therethrough at an outer peripheral rim thereof to allow the separated oil to drop into an oil collection chamber. A float valve arrangement is provided in the oil collection chamber which permits periodic dispensing of the oil from the chamber to an oil reservoir.

The refrigerant gas which is largely free of oil passes through a central passage or conduit to proceed to the condenser.

According to the invention the enhanced effective length of the peripheral wall is provided by putting a stationary helical wall or auger in the annular space between the peripheral wall and the center conduit for leading the refrigerant gas from the separator. The oil/refrigerant mixture is introduced to the oil separator at a top end of the device in a generally axial direction and is caused to impinge upon the flights of the helical wall and to follow the helical path as the mixture moves downwardly.

### ON THE DRAWINGS

FIG. 1 illustrates a refrigeration system incorporating an oil separator embodying the principles of the present invention.

FIG. 2 is a side sectional view of an oil separator embodying the principles of the present invention.

FIG. 3 is a sectional view taken generally along the line III-III of FIG. 2.

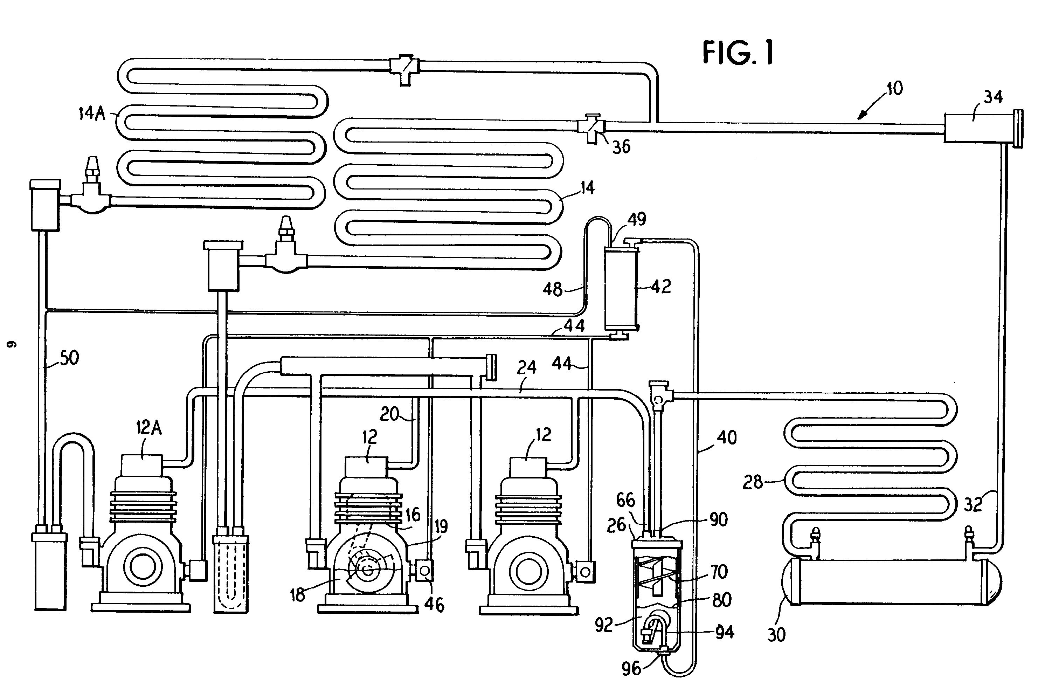

In FIG. 1 there is illustrated a standard refrigeration system 10. In such a system one or more compressors 12 are used to compress a refrigerant gas after that gas has expanded in an evaporator 14. The compressors 12 utilize a reciprocating piston 16. Oil 18 is provided in an abundant supply within a crankcase 19 of the compressor 12 both to provide lubrication to the piston 16 as well as to enhance the sealing of the piston within the compressor so as to increase the efficiency of the compressor. During operation of the compressor, the oil becomes atomized and mixed with the refrigerant as the mixture leaves through an exit conduit 20. The mixture passes into a manifold 24 which communicates with additional compressors 12 if there are multiple compressors arranged in a parallel arrangement.

Since the oil is not a refrigerant and the presence of oil in the refrigerant decreases the efficiency of the remainder of the refrigeration system, an oil separator 26 is provided in the line between the compressor 12 and a condenser 28 so as to remove the oil from the gas mixture. An improved oil separator embodying the principles of the present invention is described in greater detail below.

As the gas moves into the condenser 28 it is cooled and is caused to condense into a liquid which is captured in a receiver 30. The cooled refrigerant liquid then flows through a conduit 32, through a filter-dryer 34, and through an expansion valve 36 to the evaporator 14. In the evaporator the liquid refrigerant is caused to evaporate thereby absorbing heat energy and thus cooling an area associated with the evaporator. The refrigerant gas then flows through conduit 38 to return to the compressors 12. More than one evaporator 14, 14A may be provided, and if so, one or more satellite compressors 12A are provided to receive and compress the refrigerant gas from the extra evaporators 14A to feed the compressed gas/oil mixture to the manifold 24 for passage through the oil separator 26.

The oil which has been separated in the oil separator 26 is directed through a conduit 40 to an oil reservoir 42 from which it is supplied through conduits 44 to the compressors 12. Oil level regulators 46 associated with each compressor allow for the introduction of the proper amount of oil to the compressors. The oil reservoir 42 is provided with a vent line 48 having a valve 49 therein which reduces the pressure within the oil reservoir to a level just slightly in excess of that present in a gas inlet line 50 so as to provide a slight positive pressure to ensure an adequate oil supply from the oil reservoir 42 to the oil level regulators 46.

The oil level regulators 46 control the oil level in each crankcase 19 by means of a float operated valve. The oil level regulator 46 holds back excess oil until the oil level in the compressor crankcase 19 drops, lowering the float and opening the valve. Oil from the oil reservoir 42 will then be admitted into the crankcase raising the float. When the correct level is reached, the valve will close, stopping the flow of oil to that particular crankcase. The oil level regulators may also be adjustable to provide slightly varying oil levels within the crankcase as disclosed in U.S. Patent No. 4,428,208, assigned to the assignee of the present invention and incorporated herein by reference.

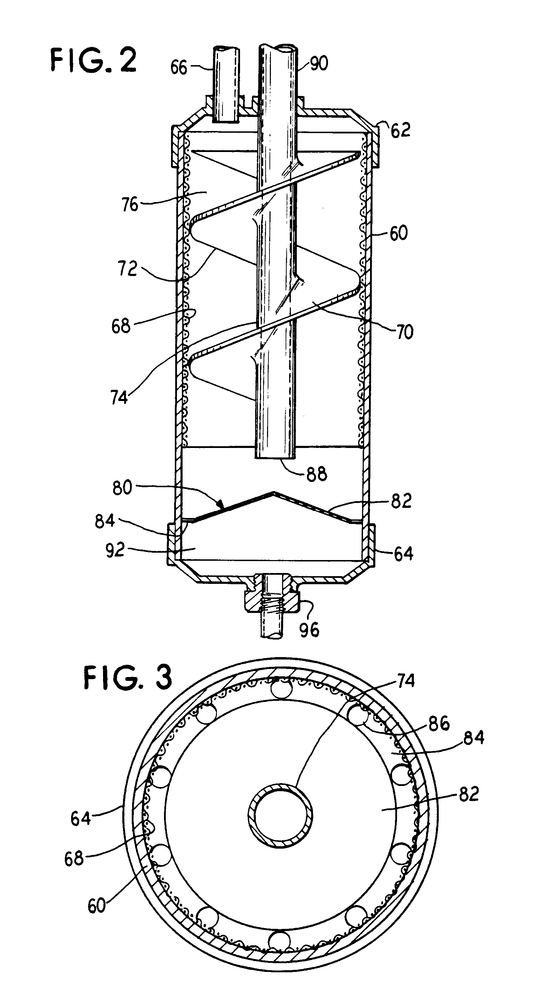

The improved oil separator 26 embodying the principles of the present invention is shown in greater details in FIGS. 2 and 3. The oil separator has a generally cylindrical vertical axis outer housing or peripheral wall 60 which is closed by a top end cap 62 and a bottom end cap 64. The top end cap 62 includes an inlet 66 extending parallel to an axis of the housing for connection to the manifold 24 from the compressors 12. The oil enters the oil separator inlet 66 in the form of a fog carried along with the refrigerant gas. Lining an inside surface of the oil separator housing 60 is a means for collecting and separating oil from the oil/gas mixture, preferably in the form of a mesh screen 68 which preferably is a 20 mesh steel wire cloth made with .016˝ wire diameter. The screen 68 extends around the entire periphery of the housing 60 and extends along a portion of the height of the housing from the top end cap 62 towards the bottom.

Interior of the housing is a static auger 70 which has a helical thread wall or flights 72 formed thereon and extending outwardly from a central hollow cylindrical conduit 74 toward the peripheral wall 60. The wall 72 of the auger 70 is sized to be closely adjacent to or in contact with the steel mesh liner, but spaced from the peripheral wall 60, such that a helical flow path 76 results between the inlet 66 and a lower portion of the collector. The helical wall 72 preferably makes at least two full revolutions. Thus, the oil/refrigerant mixture will be forced to follow a largely circumferential flow path along the mesh screen 68 providing a substantially longer effective length of the steel mesh screen seen by the oil/refrigerant mixture than if the oil/refrigerant mixture were allowed to flow axially along the peripheral wall 60.

Both the mesh screen 68 and the auger 70 terminate well above the bottom end cap 64. Spaced below the mesh screen 68 and the auger 70 is an inverted funnel/baffle 80 which has a central conical wall 82 sloping downwardly and outwardly to a relatively horizontal peripheral rim area 84 which continuously engages the peripheral wall 60. In the peripheral rim area 84 are provided a plurality of apertures 86 which act as drain holes for the oil which has collected on the mesh screen 68 and which has dripped from the screen. The refrigerant, which is now relatively free of oil, exits the oil separator 26 through the interior of the conduit 74 through a bottom opening 88 thereof which is spaced above the baffle 80 and leaves the oil separator 26 at an outlet 90 which leads to the condenser 28.

The oil which has separated from the refrigerant and which has drained through the apertures 86 collects in a collection area or chamber 92 in the bottom of the oil separator. A float valve 94 is provided as shown in FIG. 1 to periodically dispense collected oil from the collection zone through an oil return fitting 96 to the conduit 40 leading to the oil reservoir 42.

As is apparent from the foregoing specification, the invention is susceptible of being embodied with various alterations and modifications which may differ particularly from those that have been described in the preceding specification and description.

## Claims

1. A device for separating oil from a gas, comprising a cylindrical vertical axis housing formed by a peripheral wall (60) and having closed top (62) and bottom ends (64); an oil/gas mixture inlet (66) provided adjacent to said closed top end; a gas outlet conduit formed by a cylindrical wall (90) extending through said top end and having a lower end (88) interior of said housing, said cylindrical wall forming a central passage coaxial with said axis; a helical wall (72) extending more than a full revolution about said axis, extending from an area adjacent said top end and terminating above said bottom end; a conical baffle (80) spaced below said helical wall; at least one aperture (86) extending through said baffle (80); an oil collection zone below said baffle; and an oil outlet in said oil collection zone extending through said bottom end; characterized in that said helical wall (70) extends from said cylindrical wall (90) towards, but terminates radially inwardly of said peripheral wall (60); said conical baffle is spaced below said lower end (88) of said cylindrical wall (90), said baffle (80) extends across a diameter of said housing and is in engagement with said peripheral wall (60); and a float valve (94) is positioned in said oil collection zone (92) to periodically dispense oil from said device.

2. A device according to claim 1, characterized in that it includes means (68) for collecting and separating oil from said oil/gas mixture located between that helical wall (72) and said peripheral wall (60).

3. A device according to claim 1, characterized in that said helical wall (72) extends through at least two revolutions.

4. A device according to claim 2, characterized in that said means for collecting and separating oil comprises a mesh screen liner (68) on the interior of said peripheral wall (60).

5. A device according to claim 1, characterized in that said baffle (80) is in continuous engagement with said peripheral wall (60).

## Patentansprüche

1. Eine Vorrichtung zum Abtrennen von Öl von einem Gas, mit einem zylindrischen Gehäuse mit vertikal verlaufender Achse, das von einer Umfangswandung (60) gebildet wird und mit geschlossenen oberen (62) und unteren Enden (64) versehen ist, einem Einlaß (66) für das Öl/Gas-Gemisch, der benachbart dem geschlossenen oberen Ende vorgesehen ist; einer Gasauslaßleitung, die durch eine zylindrische Wandung (90) gebildet wird, die sich durch das obere Ende erstreckt und ein unteres Ende (88) im Inneren des Gehäuses hat, wobei die zylindrische Wandung eine mittlere Passage, die koaxial mit der Achse ist, bildet; einer schraubenförmigen Wandung (72), die sich mehr als eine Volldrehung um die Achse erstreckt, sich von einem Bereich benachbart dem oberen Ende erstreckend und oberhalb des unteren Endes auslaufend; einem konischen Leitblech (80), das unterhalb der schraubenförmigen Wandung beabstandet ist, wenigstens einer Öffnung (86), die sich durch das Leitblech (80) erstreckt; einer Ölsammelzone unterhalb des Leitblechs; und einem Ölauslaß in der Ölsammelzone, der sich durch das untere Ende erstreckt;
dadurch gekennzeichnet, daß
die schraubenförmige Wandung (70) sich von der zylindrischen Wandung (90) zu der Umfangswandung (60) erstreckt, jedoch radial nach innen von dieser ausläuft; wobei das konische Leitblech unterhalb des unteren Endes (88) der zylindrischen Wandung (90) beabstandet ist, das Leitblech (80) sich über einen Durchmesser des Gehäuses erstreckt und in Eingreif mit der Umfangswandung (60) ist; und ein Schwimmerventil (94) in der Ölsammelzone (92) positioniert ist, um das Öl periodisch von der Einrichtung abzuführen.

2. Eine Vorrichtung nach Anspruch 1, dadurch gekennzeichnet, daß Mittel (68) vorgesehen sind, um Öl zu sammeln und von dem Öl/Gas-Gemisch abzuführen, angeordnet zwischen der schraubenförmigen Wandung (72) und der Umfangswandung (60).

3. Vorrichtung nach Anspruch 1, dadurch gekennzeichnet, daß die schraubenförmige Wandung (72) sich über wenigstens zwei Umdrehungen erstreckt.

4. Eine Vorrichtung nach Anspruch 2, dadurch gekennzeichnet, daß Mittel zum Sammeln und zum Trennen von Öl eine Maschenschirmverkleidung (68) an dem Inneren der Umfangswandung (60) aufweist.

5. Eine Vorrichtung nach Anspruch 1, dadurch gekennzeichnet, daß das Leitblech (80) in kontinuierlichem Eingriff mit der Umfangswandung (60) ist.

## Revendications

1. Appareil de séparation d'huile d'un gaz, comprenant un corps cylindrique à axe vertical formé par une paroi périphérique (60), ayant une extrémité supérieure (62) et une extrémité inférieure (64) fermées, une entrée de mélange huile-gaz (66) prévue près de l'extrémité supérieure fermée, un conduit de sortie de gaz formé par une paroi cylindrique (90) traversant l'extrémité supérieure et ayant une extrémité inférieure (88) intérieure au corps, cette paroi cylindrique formant un passage central dont l'axe coïncide avec ledit axe, une paroi hélicoïdale (72) faisant plus d'un tour complet autour dudit axe, partant d'une zone voisine de l'extrémité supérieure et se terminant au-dessus de l'extrémité inférieure, un déflecteur conique (80) situé à une certaine distance au-dessous de cette paroi hélicoïdale, au moins une ouverture (86) faite dans ce déflecteur (80), une zone de rassemblement d'huile située sous le déflecteur, et une sortie d'huile prévue dans cette zone de rassemblement d'huile et traversant l'extrémité inférieure, caractérisé par le fait que la paroi hélicoïdale (70) s'étend à partir de la paroi cylindrique (90) vers la paroi périphérique (60), mais se termine à l'intérieur, radialement, de celle-ci, le déflecteur conique est situé à une certaine distance au-dessous de l'extrémité inférieure (88) de la paroi cylindrique (90), le déflecteur (80) s'étend sur un diamètre du corps et est en prise avec la paroi périphérique (60), et une soupape à flotteur (94) est placée dans la zone de rassemblement d'huile (92) pour délivrer périodiquement de l'huile à partir de l'appareil.

2. Appareil selon la revendication 1, caractérisé par le fait qu'il comporte un moyen (68) de oellecte et de séparation de l'huile du mélange huile-gaz situé entre la paroi hélicoïdale (72) et la paroi périphérique (60).

3. Appareil selon la revendication 1, caractérisé par le fait que la paroi hélicoïdale (72) fait au moins deux tours.

4. Appareil selon la revendication 2, caractérisé par le fait que le moyen de collecte et de séparation de l'huile comprend une chemise écran à mailles (68) appliquée sur la face intérieure de la paroi périphérique (60).

5. Appareil selon la revendication 1, caractérisé par le fait que le déflecteur (80) est en prise continue avec la paroi périphérique (60).
